# EUROPEAN PATENT APPLICATION

(11) **EP 4 729 798 A1**
(43) Date of publication of application: **22.04.2026**
(21) Application number: 24825619.0
(22) Date of filing: 17.05.2024
(51) Int. Cl.: F16D 7/08, B25B 21/00, B25B 23/157, F16D 43/206

(54) **TORQUE CLUTCH MECHANISM AND POWER TOOL**

(30) Priority: 19.06.2023 JP 2023100235
(71) Applicant: Panasonic Corporation, Osaka 571-8501 (JP)
(72) Inventor: NAKAMURA, Masamichi, Kadoma-shi, Osaka 571-0057 (JP)
(74) Representative: Müller-Boré & Partner Patentanwälte PartG mbB
(86) International application number: PCT/JP2024/018292
(87) International publication number: WO 2024/262210

(57) **Abstract**

An object is to provide a torque clutch mechanism and a power tool which are configured to make a magnitude of load torque which causes idle running in the torque clutch mechanism different between forward rotation driving and reverse rotation driving. In a torque clutch mechanism (1), rotation of a base member (2) in a state where a lock projection (23) of a base-side counter surface (22) is locked with a lock body (4) rotates a clutch member (3), and when load torque applied to the clutch member (3) reaches or exceeds a predetermined value, the lock projection (23) climbs over the lock body (4), and the base member (2) thus runs idly. A through hole (33) has an inner surface (330) on which the lock body (4) abuts during forward rotation of the base member (2) and an inner surface (331) on which the lock body (4) abuts during reverse rotation. Angles (α, β) formed respectively between a clutch-side counter surface (34) and the inner surfaces (330, 331) are different from each other.

## Description

### Technical Field

The present disclosure relates to a torque clutch mechanism and a power tool.

### Background Art

Patent Literature 1 describes a torque clutch mechanism of a tightening tool. The torque clutch mechanism includes: a lock body biased by a clutch spring; and a rotatable ring gear provided with a lock projection which is locked with the lock body or climbs over the lock body.

Incidentally, in the tightening tool described in Patent Literature 1, the lock projection has an axisymmetric chevron shape in a rotation direction of the ring gear. Therefore, in this tightening tool, when application of load torque to an output shaft at a tool tip end causes the lock projection to climb over the lock body to cause idle running of the ring gear, a magnitude of the load torque which causes the idle running is substantially the same during forward rotation driving and during reverse rotation driving.

While a screw tightened by using the effect of the torque clutch mechanism of this tightening tool is loosened, if load torque substantially equal to the load torque which causes the idle running of the ring gear during the forward rotation driving causes the idle running of the ring gear during the reverse rotation driving, the screw thus tightened cannot be removed. Therefore, this tightening tool may require the operation of disabling the torque clutch mechanism and/or the labor of preparing another tool.

### Citation List

### Patent Literature

Patent Literature 1: JP 2015-113944 A

### Summary of Invention

It is an object of the present disclosure to provide: a torque clutch mechanism configured to make a magnitude of load torque which causes idle running in the torque clutch mechanism different between forward rotation driving and reverse rotation driving; and a power tool including the torque clutch mechanism.

A torque clutch mechanism of an aspect according to the present disclosure includes: a base member rotatable about an axis extending in one direction; a clutch member aligned with the base member in the one direction and having a through hole penetrating the clutch member in the one direction; and a lock body movably housed in the through hole. The torque clutch mechanism further includes a pressing member configured to elasticity press the lock body against the base member. The base member has a base-side counter surface facing the clutch member, the base-side counter surface having a lock projection protruding toward the clutch member. The torque clutch mechanism is configured such that rotation of the base member in a state where the lock projection is locked with the lock body rotates the clutch member together with the base member. The torque clutch mechanism is configured such that when load torque applied to the clutch member reaches or exceeds a predetermined value, the lock body is pressed by the lock projection and moves toward the pressing member, the lock projection climbs over the lock body, and the base member runs idly. The through hole has a first inner surface on which the lock body abuts in forward rotation of the base member and a second inner surface on which the lock body abuts in reverse rotation of the base member. The clutch member has a clutch-side counter surface facing the base member, and a first angle formed between the first inner surface and the clutch-side counter surface is different from a second angle formed between the second inner surface and the clutch-side counter surface.

A power tool of an aspect according to the present disclosure includes: a motor including a rotary shaft; a deceleration mechanism coupled to the rotary shaft; the torque clutch mechanism coupled to the deceleration mechanism; and an output shaft coupled to the torque clutch mechanism.

### Brief Description of Drawings

[FIG. 1] FIG. 1 is a front view of a power tool of an embodiment according to the present disclosure;
[FIG. 2] FIG. 2 is a sectional view of the power tool taken along line A-A of FIG. 1;
[FIG. 3] FIG. 3 is a perspective view of a torque clutch mechanism included in the power tool;
[FIG. 4] FIG. 4 is an exploded perspective view of the torque clutch mechanism;
[FIG. 5] FIGS. 5A and 5B are each a sectional view of operation of the torque clutch mechanism during forward rotation driving;
[FIG. 6] FIGS. 6A and 6B are each a sectional view of operation of the torque clutch mechanism during reverse rotation driving; and
[FIG. 7] FIG. 7A is a sectional view of a first variation of the torque clutch mechanism, and FIG. 7B is a sectional view of a second variation of the torque clutch mechanism.

### Description of Embodiments

### (Embodiment)

### 1. Overview

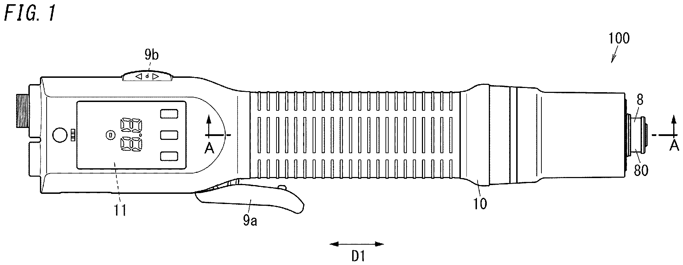

A torque clutch mechanism 1 of an embodiment shown in FIGS. 1 to 6 includes: a base member 2 rotatable about an axis L1 extending in one direction D1; and a clutch member 3 aligned with the base member 2 in the one direction D1 and having a through hole 33 penetrating the clutch member 3 in the one direction D1. The torque clutch mechanism 1 of the first aspect further includes: a lock body 4 movably housed in the through hole 33; and a pressing member 5 configured to elasticity press the lock body 4 against the base member 2. The base member 2 has a base-side counter surface 22 facing the clutch member 3, the base-side counter surface 22 having a lock projection 23 protruding toward the clutch member 3. The torque clutch mechanism 1 is configured such that rotation of the base member 2 in a state where the lock projection 23 is locked with the lock body 4 rotates the clutch member 3 together with the base member 2. The torque clutch mechanism 1 is configured such that when load torque applied to the clutch member 3 reaches or exceeds a predetermined value, the lock body 4 is pressed by the lock projection 23 and moves toward the pressing member 5, the lock projection 23 climbs over the lock body 4, and the base member 2 runs idly. The through hole 33 has a first inner surface 330 on which the lock body 4 abuts in forward rotation of the base member 2 and a second inner surface 331 on which the lock body 4 abuts in reverse rotation of the base member 2. The clutch member 3 has a clutch-side counter surface 34 facing the base member 2, and a first angle α formed between the first inner surface 330 and the clutch-side counter surface 34 is different from a second angle β formed between the second inner surface 331 and the clutch-side counter surface 34.

Moreover, a power tool 100 of the embodiment includes: a motor 6 including a rotary shaft 60; a deceleration mechanism 7 coupled to the rotary shaft 60; the torque clutch mechanism 1 coupled to the deceleration mechanism 7; and an output shaft 8 coupled to the torque clutch mechanism 1.

The torque clutch mechanism 1 and the power tool of 100 of the embodiment which are configured as described above enables friction resistance caused between the lock body 4 and the first inner surface 330 during forward rotation driving and friction resistance caused between the lock body 4 and the second inner surface 331 during reverse rotation driving to be made different from each other. Therefore, the torque clutch mechanism 1 and the power tool 100 enable a magnitude of the load torque which causes idle running in the torque clutch mechanism 1 to be made different between the forward rotation driving and the reverse rotation driving by a magnitude corresponding to the difference in the friction resistance.

### 2. Details

Subsequently, the torque clutch mechanism 1 and the power tool 100 of the embodiment will be described in further detail with reference to the drawings.

### 2-1. Power Tool

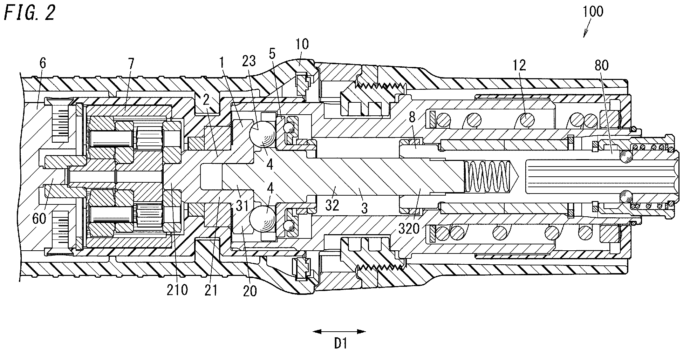

As shown in FIGS. 1 and 2, the power tool 100 includes: the motor 6 including the rotary shaft 60; the deceleration mechanism 7 coupled to the rotary shaft 60; the torque clutch mechanism 1 coupled to the deceleration mechanism 7; and the output shaft 8 coupled to the torque clutch mechanism 1. The power tool 100 further includes: a plurality of operation parts 9a and 9b for operating the power tool 100; a housing 10 defining an external contour of the power tool 100; a controller 11 configured to control the power tool 100; and a spring member 12 configured to elasticity press the pressing member 5 against the lock body 4.

In the present embodiment, the deceleration mechanism 7 includes a two stages of decelerators. The deceleration mechanism 7 includes a planet gear mechanism. Note that the deceleration mechanism 7 can accordingly employ a conventionally well-known structure.

The output shaft 8 has a tip end provided with an applied part 80. To the applied part 80, tip tools, such as a drill bit and a driver bit, are detachably attachable. The output shaft 8 is coupled via the torque clutch mechanism 1 and the deceleration mechanism 7 to the rotary shaft 60 of the motor 6. Rotation of the rotary shaft 60 of the motor 6 is transmitted via the deceleration mechanism 7 and the torque clutch mechanism 1 to the output shaft 8 and rotates a tip tool attached to the tip end of the output shaft 8.

The operation part 9a is a part for operating driving and stopping of the power tool 100. In the present embodiment, the operation part 9a has a lever shape. The operation part 9b is a part for switching the power tool 100 between the forward rotation driving and the reverse rotation driving. In the present embodiment, the operation part 9b is a switch.

The housing 10 defines the external contour of the power tool 100. The housing 10 houses the motor 6, the deceleration mechanism 7, the torque clutch mechanism 1, the output shaft 8, the controller 11, and the spring member 12 therein.

The controller 11 controls the rotation of the motor 6 on the basis of the operations by the operation parts 9a and 9b. The controller 11 is a device including, as a main component, a computer system such as a microcomputer.

The spring member 12 is indirectly coupled to the pressing member 5 of the torque clutch mechanism 1 and applies a biasing force to the pressing member 5 toward the lock body 4.

To an opposite end of the power tool 100 from the output shaft 8, an AC adapter (not shown) which is to be connected to a commercial power supply is detachably attached. The power tool 100 can drive the motor 6 by electric power supplied from the commercial power supply to rotate the tip tool attached to the applied part 80 at the tip end of the output shaft 8.

### 2-2. Torque Clutch Mechanism

Subsequently, the torque clutch mechanism 1 shown in FIGS. 2 to 6 will be described in detail. The torque clutch mechanism 1 is a mechanism which stops transmission of motive power of the motor 6 to the output shaft 8 when the tip tool of the power tool 100 receives load torque greater than or equal to the predetermined value.

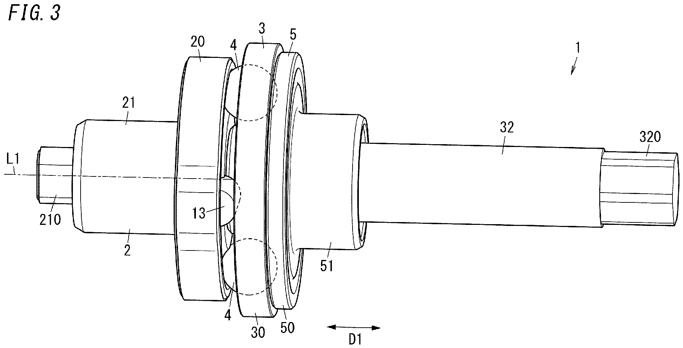

As shown in FIGS. 3, 4, and 5A, the torque clutch mechanism 1 includes the base member 2, the clutch member 3, the lock body 4, and the pressing member 5.

The base member 2 is rotatable about the axis L1. In the present embodiment, the base member 2 includes: a base plate 20 having a disk shape; and a coupler 21 having a circularly columnar shape and protruding from a center part of the base plate 20 to one side (specifically, away from the clutch member 3) in the one direction D1. The base plate 20 and the coupler 21 are concentrically disposed. As shown in FIG. 2, the coupler 21 has a tip end 210 coupled to the deceleration mechanism 7.

As shown in FIGS. 3, 4, and 5A, the base plate 20 has the base-side counter surface 22 facing the clutch member 3. The base-side counter surface 22 includes the lock projection 23 protruding toward the clutch member 3.

The base-side counter surface 22 has a slide groove 24 in which part of the lock body 4 is housed. The slide groove 24 is a circularly annular groove when viewed in the one direction D1. As shown in FIG. 2, the slide groove 24 has a cross-sectional surface which is orthogonal to the circumferential direction thereof and which has a shape in which the part of the lock body 4 can be fitted (in other words, a shape matching the shape of the part of the lock body 4).

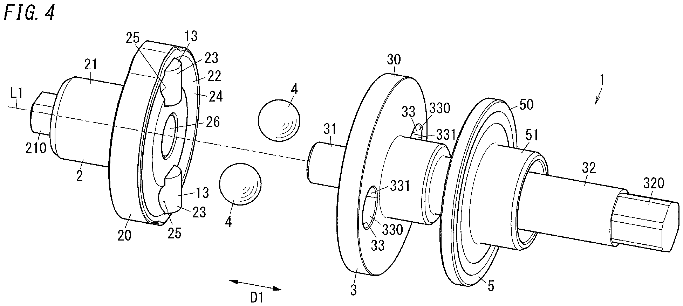

As shown in FIG. 4, the base member 2 has a recess 25 in part of the base-side counter surface 22. In the present embodiment, the recess 25 is located in part of the slide groove 24 in the circumferential direction and is provided to transverse the slide groove 24 in a radial direction of the base plate 20.

That is, in the radial direction of the base plate 20, the recess 25 is longer than the part of the slide groove 24 in the circumferential direction. To the recess 25, a circularly columnar body 13 is attached. The circularly columnar body 13 is rotatably attached to the recess 25. In the present embodiment, the circularly columnar body 13 is attached to the recess 25 such that a central axis of the circularly columnar body 13 is parallel to the radial direction of the base plate 20. Part of the circularly columnar body 13 is housed in the recess 25, and the remaining portion of the circularly columnar body 13 protrudes from the recess 25. Of the circularly columnar body 13, the portion protruding from the recess 25 has an outer peripheral surface which is the lock projection 23.

In the present embodiment, the base-side counter surface 22 has two recesses 25. The two recesses 25 are disposed apart from each other by 180 degrees in the circumferential direction of the slide groove 24. In each of the two recesses 25, one circularly columnar body 13 is rotatably housed.

Therefore, the base-side counter surface 22 has two lock projections 23 formed thereon, and the two lock projections 23 are disposed apart from each other by 180 degrees in a circumferential direction of the base plate 20. The two circularly columnar bodies 13 housed in the respective two recesses 25 have central axes located on an identical straight line.

The base-side counter surface 22 has a center part having a bearing hole 26 when viewed in the one direction D1. The bearing hole 26 has a circular shape.

The clutch member 3 is aligned with the base member 2 in the one direction D1. The clutch member 3 has the through hole 33 penetrating the clutch member 3 in the one direction D1.

The clutch member 3 includes: a body 30 having a disk shape; a first shaft part 31 having a circularly columnar shape and protruding from a center part of the body 30 to one side (specifically, toward the base member 2) in the one direction D1; and a second shaft part 32 protruding from the center part of the body 30 to the other side (specifically, away from the base member 2) in the one direction D1. The first shaft part 31, the body 30, and the second shaft part 32 are concentrically disposed. The first shaft part 31 is inserted into the bearing hole 26 of the base member 2. Thus, the base member 2 and the clutch member 3 are concentrically and rotatably combined with each other.

As shown in FIG. 2, the second shaft part 32 has a tip end 320, and the tip end 320 is fixed to the output shaft 8. Thus, the clutch member 3 and the output shaft 8 rotates together.

As shown in FIG. 4, the body 30 has the through hole 33 penetrating the body 30 in the one direction D1. In the present embodiment, the body 30 has two through holes 33. Each of the two through holes 33 has: a first inner surface 330 on which the lock body 4 abuts during the forward rotation driving; and a second inner surface 331 on which the lock body 4 abuts during the reverse rotation driving. The two through holes 33 are disposed apart from each other by 180 degrees in a circumferential direction of the body 30.

In the circumferential direction of the body 30, a half of an inner peripheral surface of each through hole 33 is the first inner surface 330, and the remaining half is the second inner surface 331. The first inner surface 330 and the second inner surface 331 face each other in the circumferential direction of the body 30.

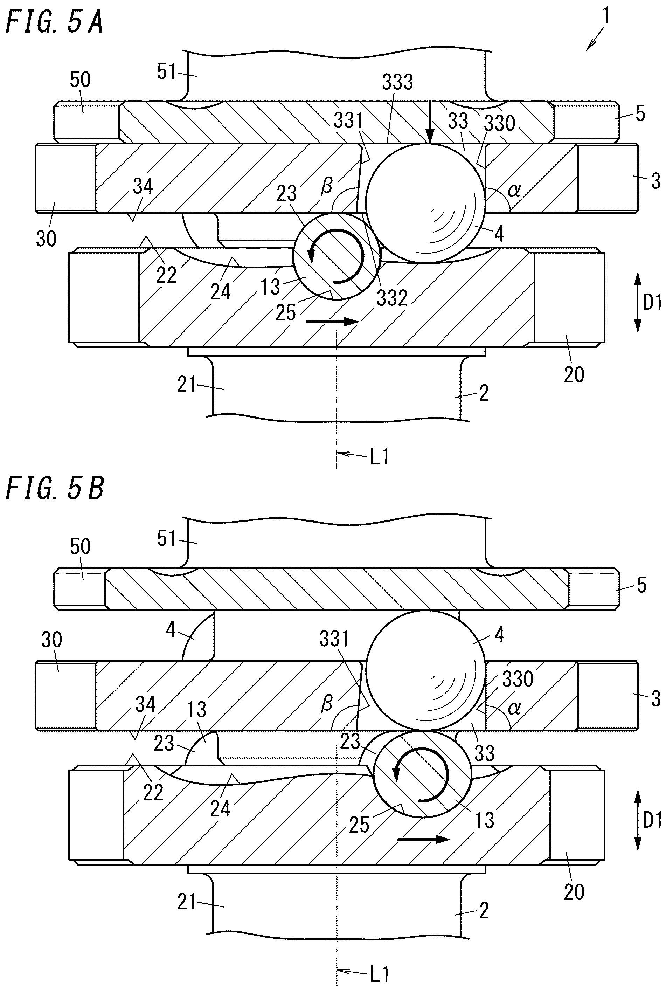

As shown in FIG. 5A, the body 30 has a clutch-side counter surface 34 facing the base plate 20 of the base member 2. A first angle α formed between the clutch-side counter surface 34 and the first inner surface 330 is different from a second angle β formed between the clutch-side counter surface 34 and the second inner surface 331. In the present embodiment, the second angle β is greater than the first angle α. In the present embodiment, the first angle α is 90 degrees, and the second angle β is 95 degrees. The first angle α and the second angle β are preferably different from each other by greater than or equal to 3 degrees and less than or equal to 10 degrees. Moreover, the second angle β is preferably greater than or equal to 93 degrees and less than or equal to 100 degrees.

Of openings which each through hole 33 has at both ends thereof in the one direction D1, an opening 332 located on the clutch-side counter surface 34 has an elliptic shape. An opening 333 on an opposite side of the through hole 33 from the opening 332 has a circular shape. The opening 332 has an elliptic shape slightly more elongated in the reverse rotation direction (i.e., counterclockwise direction) than the opening 333 when viewed from the base member 2 in the one direction D1.

Each of the openings 332 and 333 has a size and a shape which allow the lock body 4 to pass therethrough. The opening 333 having the circular shape has substantially the same size and shape as a cross-sectional surface of the lock body 4 taken along a line passing through the center of the lock body 4. In a circumferential direction of the clutch member 3, the opening 332 having the elliptic shape has a longer length than the opening 333. In a radial direction of the body 30 having the disk shape, the opening 332 has the same length as the opening 333. The opening 332 has a larger opening area than the opening 333.

The lock body 4 has a cross-sectional surface having a circular shape, the cross-sectional surface being orthogonal to a radial direction of the base member 2, the radial direction of the base member 2 being orthogonal to the axis L1. In the present embodiment, the lock body 4 is a steel sphere. The lock body 4 is movably housed in the through hole 33. The lock body 4 is constantly in contact with the base-side counter surface 22 of the base member 2. That is, the lock body 4 is in contact with the slide groove 24 or the lock projection 23.

The pressing member 5 is a member which elasticity presses the lock body 4 against the base member 2. As shown in FIG. 4, the pressing member 5 includes: a body 50 having a circularly annular plate shape when viewed in the one direction D1; and a cylindrical part 51 protruding from the body 50 to one side (specifically, away from the base member 2) in the one direction D1. The body 50 and the cylindrical part 51 are concentrically disposed.

The pressing member 5 is attached to the clutch member 3 such that the body 50 overlaps the body 30 of the clutch member 3 and the second shaft part 32 of the clutch member 3 is fitted in the cylindrical part 51. The body 50 of the pressing member 5 receives a biasing force from the spring member 12 (see FIG. 2) and is biased toward the body 30 of the clutch member 3. The pressing member 5 is attached to the clutch member 3 such that the pressing member 5 is movable in the one direction D1. The biasing force toward the base member 2 is applied from the spring member 12 to the pressing member 5, and thereby, the pressing member 5 elasticity presses the lock body 4 against the base member 2.

The base member 2, the clutch member 3, the lock body 4, and the pressing member 5 which are described above are combined with each other, thereby forming the torque clutch mechanism 1 shown in shown in FIGS. 3 and 5A. As shown in FIG. 2, the torque clutch mechanism 1 is disposed in the housing 10 of the power tool 100.

In the torque clutch mechanism 1, rotation of the base member 2 in a state where the lock projection 23 is locked with the lock body 4 as shown in FIG. 5A rotates the clutch member 3 together with the base member 2. Moreover, in the torque clutch mechanism 1, when the load torque applied to the clutch member 3 reaches or exceeds the predetermined value, the lock body 4 pressed by the lock projection 23 moves toward the pressing member 5 as shown in FIG. 5B, the lock projection 23 climbs over the lock body 4, and the base member 2 thus runs idly. Idle running of the base member 2 stops transmission of motive power from the rotary shaft 60 of the motor 6 to the output shaft 8.

### 3. Operation of Torque Clutch Mechanism

Subsequently, the operation of the torque clutch mechanism 1 will be described.

The power tool 100 shown in FIGS. 1 and 2 can perform: the forward rotation driving in which the tip tool attached to the applied part 80 at the tip end of the output shaft 8 rotates clockwise when viewed in a direction from the base member 2 toward the clutch member 3 in the one direction D1; and the reverse rotation driving in which the tip tool rotates counterclockwise when viewed in the direction from the base member 2 toward the clutch member 3 in the one direction D1.

During the forward rotation driving, the rotary shaft 60 of the motor 6 rotates in a forward (i.e., clockwise) direction, and thereby, the rotation of the rotary shaft 60 is transmitted via the deceleration mechanism 7 to the base member 2, and the base member 2 rotates forward. At this time, the base member 2 rotates in a state where the two lock projections 23 of the base member 2 are locked in forward direction with respective two lock bodies 4 in the two through holes 33 of the clutch member 3, and thereby, the clutch member 3 rotates forward together with the base member 2. The clutch member 3 rotates forward, and thereby, the output shaft 8 rotates forward, and the tip tool attached to the applied part 80 at the tip end of the output shaft 8 thus rotates forward.

During the forward rotation driving, the above-described state (i.e., the state where the tip tool rotates forward) is maintained as long as the load torque received by the tip tool is less than the predetermined value. The load torque received by the tip tool is transmitted via the output shaft 8 and the clutch member 3 to the lock bodies 4, and thereby, the load torque is applied from the lock bodies 4 to the lock projections 23. While the load torque applied from the lock bodies 4 to the lock projections 23 is less than the predetermined value, the state where the lock bodies 4 are locked with the lock projections 23 is maintained, thereby inhibiting the base member 2 from idly running (specifically, inhibiting the base member 2 from rotating differently from the clutch member 3).

During the forward rotation driving, if the load torque received by the tip tool (i.e., load torque applied from the lock bodies 4 to the lock projections 23) reaches or exceeds the predetermined value, then the above-described state (i.e., the state where the tip tool rotates forward) is canceled. Specifically, each of the two lock projections 23 of the base member 2 climbs over a corresponding one of the two lock bodies 4 in the two through holes 33 of the clutch member 3, the state where each lock projection 23 is locked with the corresponding one of the two lock bodies 4 is canceled, and the base member 2 thus runs idly. This stops the transmission of the motive power from the base member 2 (more specifically, from the rotary shaft 60 of the motor 6) via the clutch member 3 to the tip tool.

During the reverse rotation driving, the torque clutch mechanism 1 operates in a similar state where only the rotation direction during the forward rotation driving described above is reversed.

Here, in the power tool 100 of the present embodiment, the torque clutch mechanism 1 has the inner surfaces 330 and 331 respectively having different angles α and β with respect to the clutch-side counter surface 34. Therefore, the power tool 100 of the present embodiment operates differently as described below between the forward rotation driving and the reverse rotation driving when the load torque received by the tip tool is greater than or equal to the predetermined value.

During the forward rotation driving, each of the lock bodies 4 pressed by a corresponding one of the lock projections 23 in the forward rotation direction moves toward the pressing member 5 against the biasing force from the pressing member 5 as shown in FIGS. 5A and 5B while abutting on the first inner surface 330, and thereby, the corresponding one of the lock projections 23 climbs over the each of the lock bodies 4.

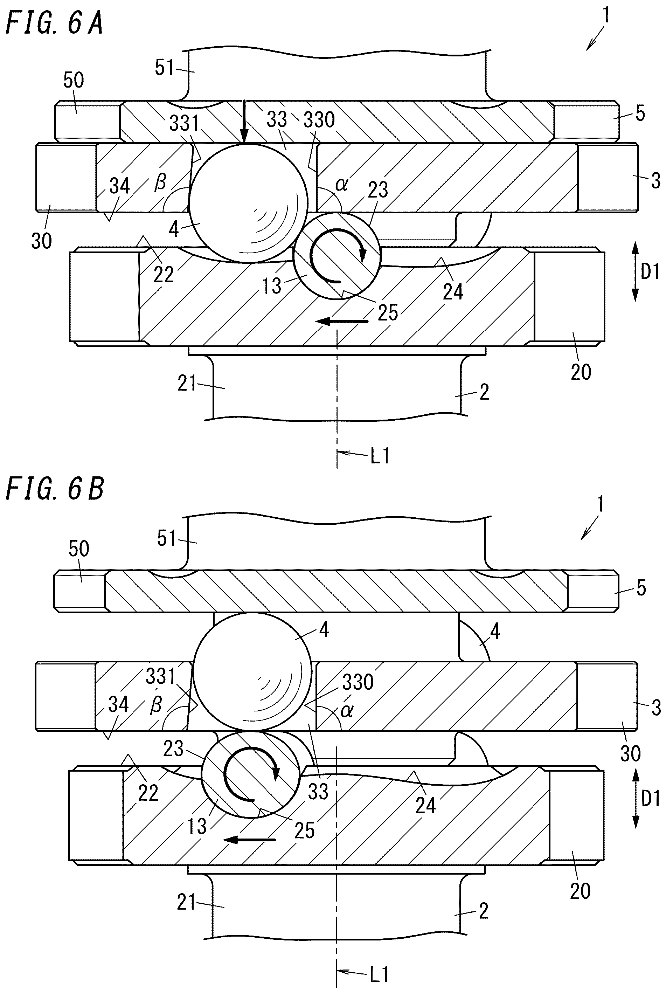

During the reverse rotation driving, each of the lock bodies 4 pressed by a corresponding one of the lock projections 23 in the reverse rotation direction moves toward the pressing member 5 against the biasing force from the pressing member 5 as shown in FIGS. 6A and 6B while abutting on the second inner surface 331, and thereby, the corresponding one of the lock projections 23 climbs over the each of the lock body 4.

Here, the second angle β of the second inner surface 331 with respect to the clutch-side counter surface 34 is greater than the first angle α of the first inner surface 330 with respect to the clutch-side counter surface 34. Thus, the friction resistance caused between the second inner surface 331 and the lock body 4 is greater than the friction resistance caused between the first inner surface 330 and the lock body 4. The possibility that the lock projections 23 climb over the lock bodies 4 during the reverse rotation driving is reduced by a degree corresponding to the difference in the friction resistance, and the magnitude of the load torque which causes the idle running in the torque clutch mechanism 1 is greater during the reverse rotation driving than during the forward rotation driving.

### 4. Operation and Advantages

In the power tool 100 of the present embodiment described above, the friction resistance caused between the lock body 4 and the second inner surface 331 during the reverse rotation driving is greater than the friction resistance caused between the lock body 4 and the first inner surface 330 during the forward rotation driving. Therefore, the possibility that the lock projections 23 climb over the lock bodies 4 during the reverse rotation driving is reduced by a degree corresponding to the difference in the friction resistance, and the magnitude of the load torque which causes the idle running in the torque clutch mechanism 1 is greater during the reverse rotation driving than during the forward rotation driving.

Thus, the power tool 100 of the present embodiment enables the base member 2 to be suppressed from running idly when a screw tightened by using the effect of the torque clutch mechanism 1 is loosened by the reverse rotation driving. Therefore, the power tool 100 of the present embodiment requires none of the operation of disabling the torque clutch mechanism 1 and the labor of preparing another power tool and is thus easy-to-use.

Moreover, in the power tool 100 of the present embodiment, accordingly adjusting the second angle β of the second inner surface 331 with respect to the clutch-side counter surface 34 enables the friction resistance caused between the lock body 4 and the second inner surface 331 to be adjusted, thereby facilitating the adjustment of the magnitude of the load torque which causes the idle running in the torque clutch mechanism 1.

Further, in the power tool 100 of the present embodiment, the cross-sectional surface of each of the lock bodies 4 has a circular shape, and therefore, of each lock body 4, a portion which abuts on the lock projection 23 and/or the inner surface 330, 331 changes frequently, and thus, each lock body 4 is less susceptible to wear.

Furthermore, in the power tool 100 of the present embodiment, each of the lock projections 23 includes the circularly columnar body 13 rotatably attached to the recess 25, and therefore, of each lock projection 23, a portion which abuts on the lock body 4 changes frequently, and thus, each lock projection 23 is less susceptible to wear.

Moreover, in the power tool 100 of the present embodiment, the lock bodies 4 are spherical, and therefore, also when the angles α and β respectively of the inner surfaces 330 and 331 with respect to the clutch-side counter surface 34 are adjusted, each lock body 4 easily moves while abutting on the first inner surface 330 or the second inner surface 331.

### 5. Variations

Subsequently, variations of the torque clutch mechanism 1 and the power tool 100 of the embodiment described above will be described. The variations described below may accordingly be combined with each other.

As long as the first angle α and the second angle β are different from each other, the second angle β may be smaller than the first angle α.

The shape of each of the lock bodies 4 is not limited to the spherical shape as long as each lock body 4 has a cross-sectional surface having a circular shape, the cross-sectional surface being orthogonal to the radial direction of the base member 2, the radial direction of the base member 2 being orthogonal to the axis L1. For example, each lock body 4 may have a circularly columnar shape having a central axis extending in the radial direction. Moreover, the cross-sectional surface of the shape of each lock body 4 is not limited to having the circular shape but may have another shape.

Moreover, each lock body 4 is not limited to being made of steel but may be made of other materials.

Moreover, the base member 2 does not have to have the recesses 25, but the lock projections 23 may be molded integrally with the base member 2.

Moreover, the circularly columnar bodies 13 may be fixed to the recesses 25 and may be non-rotatable. In this case, the member included in each lock projection 23 is not limited to having a circularly columnar shape but may have another shape.

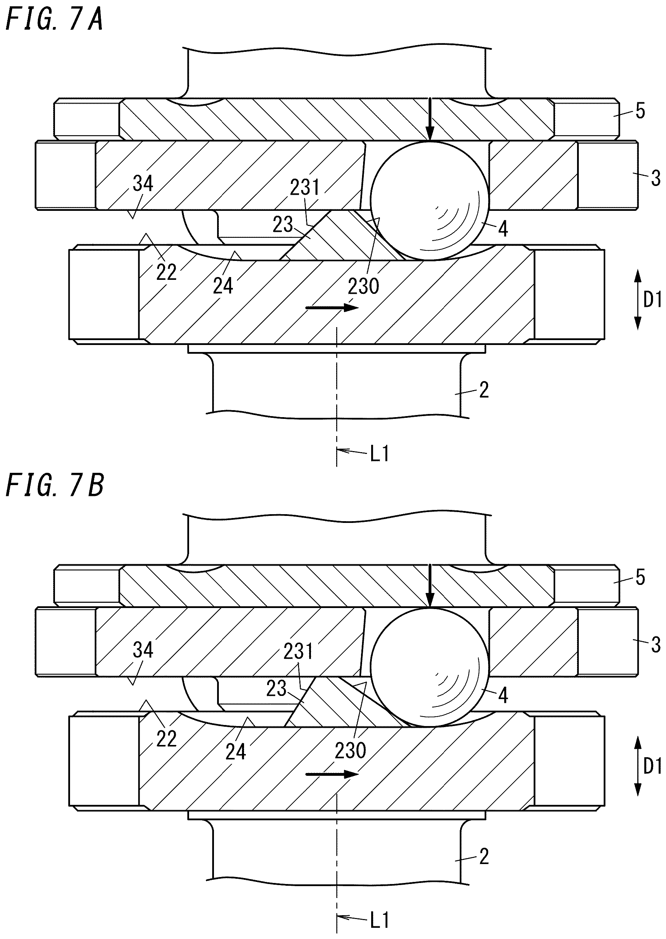

Moreover, the cross-sectional surface of the lock projection 23 is not limited to having a semicircular shape but may have another shape. For example, the cross-sectional surface of the lock projection 23 may have a trapezoidal shape having two inclined surfaces 230 and 231 as shown in a first variation shown in FIG. 7A. In the first variation, the two inclined surfaces 230 and 231 are axisymmetric.

Moreover, the two inclined surfaces 230 and 231 may be non-axisymmetric, that is, have different angles, as a second variation shown in FIG. 7B.

The torque clutch mechanism 1 is not limited to being applied to the power tool 100 having the structure shown in FIG. 1 but may be applied to a power tool having another structure.

### (Summary)

As the embodiment and the variations thereof described above, a torque clutch mechanism (1) of a first aspect has the following configuration.

That is, a torque clutch mechanism (1) of a first aspect includes: a base member (2) rotatable about an axis (L1) extending in one direction (D1); and a clutch member (3) aligned with the base member (2) in the one direction (D1) and having a through hole (33) penetrating the clutch member (3) in the one direction (D1). The torque clutch mechanism (1) of the first aspect further includes: a lock body (4) movably housed in the through hole (33); and a pressing member (5) configured to elasticity press the lock body (4) against the base member (2). The base member (2) has a base-side counter surface (22) facing the clutch member (3), the base-side counter surface (22) having a lock projection (23) protruding toward the clutch member (3). The torque clutch mechanism (1) is configured such that rotation of the base member (2) in a state where the lock projection (23) is locked with the lock body (4) rotates the clutch member (3) together with the base member (2). The torque clutch mechanism (1) is configured such that when load torque applied to the clutch member (3) reaches or exceeds a predetermined value, the lock body (4) is pressed by the lock projection (23) and moves toward the pressing member (5), the lock projection (23) climbs over the lock body (4), and the base member (2) thus runs idly. The through hole (33) has a first inner surface (330) on which the lock body (4) abuts in forward rotation of the base member (2) and a second inner surface (331) on which the lock body (4) abuts in reverse rotation of the base member (2). The clutch member (3) has a clutch-side counter surface (34) facing the base member (2), and a first angle (α) formed between the first inner surface (330) and the clutch-side counter surface (34) is different from a second angle (β) formed between the second inner surface (331) and the clutch-side counter surface (34).

The torque clutch mechanism (1) of the first aspect configured as described above enables friction resistance caused between the lock body (4) and the first inner surface (330) during forward rotation driving and friction resistance caused between the lock body (4) and the second inner surface (331) during reverse rotation driving to be made different from each other. Therefore, the torque clutch mechanism (1) of the first aspect enables a magnitude of the load torque which causes idle running in the torque clutch mechanism (1) to be made different between the forward rotation driving and the reverse rotation driving by a magnitude corresponding to the difference in the friction resistance.

Moreover, as in the embodiment and the variations thereof described above, a torque clutch mechanism (1) of a second aspect further includes the following configuration in addition to the configuration of the first aspect.

That is, in the torque clutch mechanism (1) of the second aspect, the second angle (β) is greater than the first angle (α).

In the torque clutch mechanism (1) of the second aspect configured as described above, the friction resistance caused between the lock body (4) and the second inner surface (331) is greater than the friction resistance caused between the lock body (4) and the first inner surface (330). Therefore, the torque clutch mechanism (1) of the second aspect enables the magnitude of the load torque which causes the idle running in the torque clutch mechanism (1) to be made greater during the reverse rotation driving than during the forward rotation driving. Thus, the torque clutch mechanism (1) of the second aspect enables the base member (2) to be suppressed from running idly when a screw tightened by using the effect of the torque clutch mechanism (1) is loosened by the reverse rotation driving.

Moreover, as in the embodiment and the variations thereof described above, a torque clutch mechanism (1) of a third aspect further includes the following configuration in addition to the configuration of the first or second aspect.

That is, in the torque clutch mechanism (1) of the third aspect, the lock body (4) has a cross-sectional surface having a circular shape, the cross-sectional surface being orthogonal to a radial direction of the base member (2), the radial direction of the base member (2) being orthogonal to the axis (L1).

In the torque clutch mechanism (1) of the third aspect configured as described above, the cross-sectional surface of the lock body (4) movable in the through hole (33) has the circular shape, and therefore, the lock body (4) easily comes into point contact or line contact with the first inner surface (330) or the second inner surface (331). Therefore, in the torque clutch mechanism (1) of the third aspect, the friction resistance caused between the lock body (4) and the inner surfaces (330, 331) easily stabilizes, and therefore, the magnitude of the load torque which causes the idle running in the torque clutch mechanism (1) is easily set to a targeted magnitude.

Moreover, as in the embodiment and the variations thereof described above, a torque clutch mechanism (1) of a fourth aspect further includes the following configuration in addition to the configuration of the third aspect.

That is, in the torque clutch mechanism (1) of the fourth aspect, the lock body (4) is a steel sphere.

In the torque clutch mechanism (1) of the fourth aspect configured as described above, the lock body (4) movable in the through hole (33) is spherical, and therefore, the way the lock body (4) contacts with the first inner surface (330) or the second inner surface (331) further easily stabilizes. Therefore, in the torque clutch mechanism (1) of the fourth aspect, the friction resistance caused between the lock body (4) and the inner surface (330, 331) further easily stabilizes, and therefore, the magnitude of the load torque which causes the idle running in the torque clutch mechanism (1) is easily set to a targeted magnitude. In addition, in the torque clutch mechanism (1) of the fourth aspect, the lock body (4) is a steel sphere, and therefore, the lock body (4) is less susceptible to wear. Also, in the torque clutch mechanism (1) of the fourth aspect, a commercially available common steel sphere is usable, thereby reducing the manufacturing cost.

Moreover, as in the embodiment and the variations thereof described above, a torque clutch mechanism (1) of a fifth aspect further includes the following configuration in addition to the configuration of any one of the first to fourth aspects.

That is, in the torque clutch mechanism (1) of the fifth aspect, the base member (2) has a recess (25) in part of the base-side counter surface (22). The lock projection (23) includes a circularly columnar body (13) attached to the recess (25) such that the lock projection (23) has a cross-sectional surface having a circular shape, the cross-sectional surface being orthogonal to a radial direction of the base member (2), the radial direction of the base member (2) being orthogonal to the axis (L1).

In the torque clutch mechanism (1) of the fifth aspect configured as described above, the lock projection (23) has an arc-shaped surface in a rotation direction of the base member (2), and therefore, the lock body (4) easily climbs on the lock projection (23) in the same way during the reverse rotation driving and during the forward rotation driving. Therefore, in the torque clutch mechanism (1) of the fifth aspect, the lock body (4) which is pressed by the lock projection (23) and moves toward the pressing member (5) upon application of load torque greater than or equal to the predetermined value easily abuts on the first inner surface (330) or the second inner surface (331). Moreover, in the torque clutch mechanism (1) of the fifth aspect, replacement of the circularly columnar body (13) suffices in the case of wear of the circularly columnar body (13) due to the contact of the circularly columnar body (13) with the lock body (4) or the like, thereby reducing the material cost for the replacement.

Moreover, as in the embodiment and the variations thereof described above, a torque clutch mechanism (1) of a sixth aspect further includes the following configuration in addition to the configuration of the fifth aspect.

That is, in the torque clutch mechanism (1) of the sixth aspect, the circularly columnar body (13) is rotatably attached to the recess (25).

In the torque clutch mechanism (1) of the sixth aspect configured as described above, the circularly columnar body (13) rotates in the recess (25), and therefore, it is unlikely that the same portion of the circularly columnar body (13) constantly comes into contact with the lock body (4), and thus, the circularly columnar body (13) is less susceptible to wear.

Moreover, as in the embodiment and the variations thereof described above, a power tool (100) of a seventh aspect has the following configuration.

That is, a power tool (100) of a seventh aspect includes: a motor (6) including a rotary shaft (60); a deceleration mechanism (7) coupled to the rotary shaft (60); and the torque clutch mechanism (1) of any one of the first to sixth aspects coupled to the deceleration mechanism (7). The power tool (100) further includes an output shaft (8) coupled to the torque clutch mechanism (1).

The power tool (100) of the seventh aspect configured as described above enables friction resistance caused between the lock body (4) and the first inner surface (330) during forward rotation driving and friction resistance caused between the lock body (4) and the second inner surface (331) during reverse rotation driving to be made different from each other. Therefore, this power tool (100) enables the magnitude of the load torque which causes the idle running in the torque clutch mechanism (1) to be made different between the forward rotation driving and the reverse rotation driving by a magnitude corresponding to the difference in the friction resistance.

The present disclosure has been described based on the embodiment shown in the drawings, but the present disclosure is not limited to the embodiment but may accordingly be modified in design without departing from the intended scope of the present disclosure.

### Reference Signs List

- 1: Torque Clutch Mechanism
- 2: Base Member
- 22: Base-Side Counter Surface
- 23: Lock Projection
- 25: Recess
- 3: Clutch Member
- 33: Through Hole
- 330: First Inner Surface
- 331: Second Inner Surface
- 34: Clutch-Side Counter Surface
- 4: Lock Body
- 5: Pressing Member
- 6: Motor
- 60: Rotary Shaft
- 7: Deceleration Mechanism
- 8: Output Shaft
- 13: Circularly Columnar Body
- 100: Power Tool
- D1: One Direction
- L1: Axis
- α: First Angle
- β: Second Angle

## Claims

1. A torque clutch mechanism comprising:
a base member rotatable about an axis extending in one direction;
a clutch member aligned with the base member in the one direction and having a through hole penetrating the clutch member in the one direction;
a lock body movably housed in the through hole; and
a pressing member configured to elasticity press the lock body against the base member,
the base member having a base-side counter surface facing the clutch member, the base-side counter surface having a lock projection protruding toward the clutch member,
the torque clutch mechanism being configured such that rotation of the base member in a state where the lock projection is locked with the lock body rotates the clutch member together with the base member,
the torque clutch mechanism being configured such that when load torque applied to the clutch member reaches or exceeds a predetermined value, the lock body is pressed by the lock projection and moves toward the pressing member, the lock projection climbs over the lock body, and the base member thus runs idly,
the through hole having a first inner surface on which the lock body abuts in forward rotation of the base member and a second inner surface on which the lock body abuts in reverse rotation of the base member,
the clutch member having a clutch-side counter surface facing the base member, and a first angle formed between the first inner surface and the clutch-side counter surface is different from a second angle formed between the second inner surface and the clutch-side counter surface.

2. The torque clutch mechanism of claim 1, wherein
the second angle is greater than the first angle.

3. The torque clutch mechanism of claim 1 or 2, wherein
the lock body has a cross-sectional surface having a circular shape, the cross- sectional surface being orthogonal to a radial direction of the base member, the radial direction of the base member being orthogonal to the axis.

4. The torque clutch mechanism of claim 3, wherein
the lock body is a steel sphere.

5. The torque clutch mechanism of any one of claims 1 to 4, wherein
the base member has a recess in part of the base-side counter surface, and
the lock projection includes a circularly columnar body attached to the recess such that the lock projection has a cross-sectional surface having a circular shape, the cross-sectional surface being orthogonal to a radial direction of the base member, the radial direction of the base member being orthogonal to the axis.

6. The torque clutch mechanism of claim 5, wherein
the circularly columnar body is rotatably attached to the recess.

7. A power tool comprising:
a motor including a rotary shaft;
a deceleration mechanism coupled to the rotary shaft;
the torque clutch mechanism of any one of claims 1 to 6 coupled to the deceleration mechanism; and
an output shaft coupled to the torque clutch mechanism.
